# EUROPÄISCHE PATENTSCHRIFT

(11) **EP 1 047 932 B1**
(45) Veröffentlichungstag und Bekanntmachung des Hinweises auf die Patenterteilung: **20.02.2008**
(21) Anmeldenummer: 99957940.2
(22) Anmeldetag: 28.10.1999
(51) Int. Cl.: G01N 27/407

(54) **GASSENSOR MIT DICHTUNG UND VERFAHREN ZU DESSEN HERSTELLUNG**
GAS SENSOR WITH SEAL METHOD FOR PRODUCING IT
DETECTEUR DE GAZ AVEC UNE GARNITURE D'ETANCHEITE ET PROCEDE DE PRODUCTION DE LADIT DETECTEUR

(30) Priorität: 16.11.1998 DE 19852674
(43) Veröffentlichungstag der Anmeldung: 02.11.2000
(73) Patentinhaber: ROBERT BOSCH GMBH, 70442 Stuttgart (DE)
(72) Erfinder: WEYL, Helmut, D-71701 Schwieberdingen (DE); WILD, Bernhard, D-71706 Markgroeningen (DE); DETTLING, Peter, D-71336 Waiblingen (DE)
(86) Internationale Anmeldenummer: PCT/DE1999/003451
(87) Internationale Veröffentlichungsnummer: WO 2000/029838

(56) Entgegenhaltungen:
- EP-A- 0 704 698
- DE-A- 4 126 378
- DE-A- 4 436 580
- JP-A- 3 267 751
- US-A- 5 739 414

## Beschreibung

### Stand der Technik

Di.e Erfindung geht aus von einem Gassensor mit einer Dichtung und einem Verfahren zu dessen Herstellung, nach der Gattung der unabhängigen Ansprüche.

Eine gattungsgemäße Dichtung ist aus der DE 41 26 378 A1 bekannt. Diese Dichtung verwendet ein Dichtelement aus Steatit, das zwischen zwei festgesinterten Keramikformteilen verpreßt ist. Die Dichtung trennt einen meßgasseitigen Abschnitt des Sensorelemets von einem anschlußseitigen Abschnitt des Sensorelements, wobei der anschlußseitige Abschnitt in einen Referenzgasraum ragt, der mit einem Referenzgas beaufschlagt wird. Zur Herstellung der Dichtung wird zunächst ein vorgepreßter Dichtring, der für die automatische Montage die erforderliche Festigkeit aufweist, in die Längsbohrung eingesetzt und anschließend zwischen den beiden Keramikformteilen verpreßt. Beim Verpressen des Dichtrings wird dieser zu Steatit-Pulver umformiert, das sich dann radial an das Dichtelement und an die Innenbohrung des Gehäuses anlegt und dabei das Sensorelement im Gehäuse abdichtet. Die so ausbildete Dichtung besitzt eine erhebliche Restporosität, die selbst durch hohe Verpresskräfte nicht wesentlich zu reduzieren ist. Dadurch ist die Steatit-Dichtung gegenüber flüssigen und gasförmigen Benzin sowie Wasser und Wasserdampf nur beschränkt resistent. Die im Abgas vorhandenen Benzindämpfe diffundieren in die Dichtung und werden vom Material der Dichtung zum Teil absorbiert. Bei Erwärmung des Gassensors werden die Kohlenwasserstoffe durch den hohen Dampfdruck rasch aus der Dichtung ausgetrieben. Der in den Referenzgasraum gelangende Anteil reagiert dort mit dem Sauerstoff, wodurch sich die Zusammensetzung des Referenzgases ändert und dadurch das Sensorsignal negativ beeinflußt wird.

Eine bessere Dichtungswirkung hinsichtlich der Benzindämpfe bietet eine Dichtungsanordnung, die aus der DE 195 32 090 C2 bekannt ist. Bei dieser Dichtungsanordnung wird zwischen zwei Steatit-Dichtelementen ein weiteres Dichtelement aus Bornitrid verpreßt. Die Speicherfähigkeit des Bornitrid liegt um ein Vielfaches unter der von Steatit. Voraussetzung für eine einwandfreie Dichtfunktion dieser Dichtungsanordnung ist allerdings ein möglichst enger Spalt zwischen dem vorgepreßten Bornitrid-Dichtring und dem Sondengehäuse sowie zwischen dem Bornitrid-Dichtring und dem Sensorelement. Dies stellt hohe Anforderungen an die Maßgenauigkeit der einzelnen Elemente.

Eine weitere Ausführungsform einer Dichtung besteht darin, das Sensorelement mittels einer Glaseinschmelzung in einem keramischen Haltekörper zu fixieren (EP 706 046 A1). Nachteil dieser Lösung ist jedoch die weitestgehend starre Fixierung des Sensorelements in der erstarrten Glasschmelze. Je nach Temperaturverhältnissen beim Aufheizen und Abkühlen oder unter Thermoschockbeanspruchung von außen ergeben sich Spannungszustände in der Glasschmelze, die zu Rissen in derselben führen und mit einer hohen Zugspannung auf das Sensorelement einwirkt.

Aus der US 5,739,414 ist ein Gassensor bekannt, der eine zwischen zwei Isolationselementen vorgesehene Dichtung aufweist. Die beiden Isolationselemente sind aus Steatitglas hergestellt.

In der JP 03 267751 A ist ein Sensorelement eines Gassensors offenbart, das ein Dichtmaterial bestehend aus Glas und Steatit aufweist.

Aufgabe der vorliegenden Erfindung ist es, eine weitestgehend kraftfreie Fixierung des Sensorelements zu schaffen, die gas- und benzindicht ist und darüber hinaus kostengünstig in die Massenfertigung integriert werden kann.

### Vorteile der Erfindung

Der erfindungsgemäße Gassensor mit den kennzeichnenden Merkmalen des Anspruchs 1 hat den Vorteil, daß die Dichtung sowohl gasdicht als auch für Flüssigkeiten, insbesondere für Kraftstoff undurchlässig ist und zusätzlich eine hohe Temperaturbeständigkeit aufweist. Das erfindungsgemäße Verfahren bietet den Vorteil, daß sich die Herstellung der Dichtung kostengünstig in die Massenfertigung von Gassensoren integrieren läßt.

Durch, die in den Unteransprüchen aufgeführten Maßnahmen sind vorteilhafte Weiterbildungen des im Haüptanspruch angegebenen Gassensors möglich. Geeignete Gläser mit dem erforderlichen niedrigen Schmelzpunkt sind solche, die Blei, Zink, Wismut oder Erdalkalimetalle in Form von Oxiden, Boraten, Phosphaten oder Silikaten oder eine Mischung aus diesen enthalten. Eine besonders temperaturbeständige sowie gas- und benzindichte Dichtung wird erreicht, wenn der Anteil des Steatit-Materials mindestens 70 Gew.% beträgt. Optimale Ergebnisse wurden mit einem Mischungsverhältnis von Glaspulver mit 10 - 20 Gew.% und von Steatit-Pulver von 80 - 90 Gew.% erzielt.

### Zeichnung

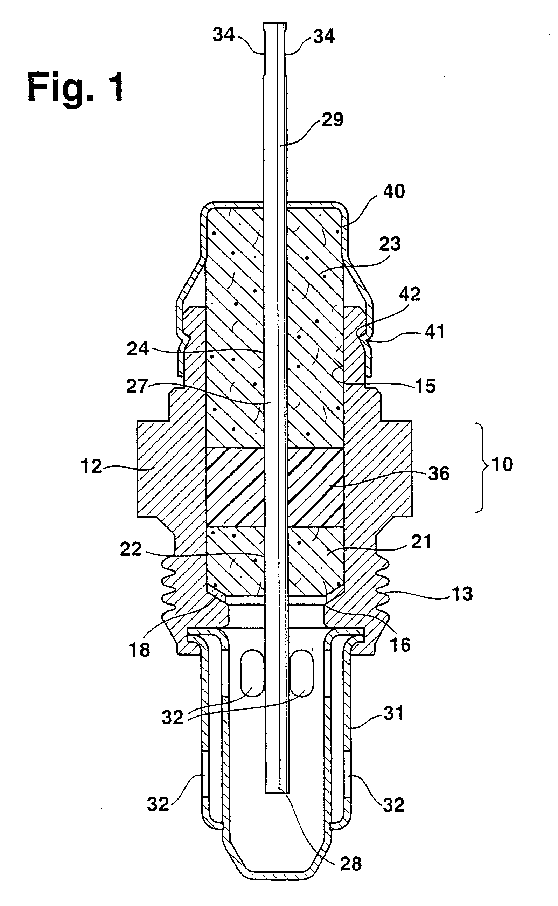

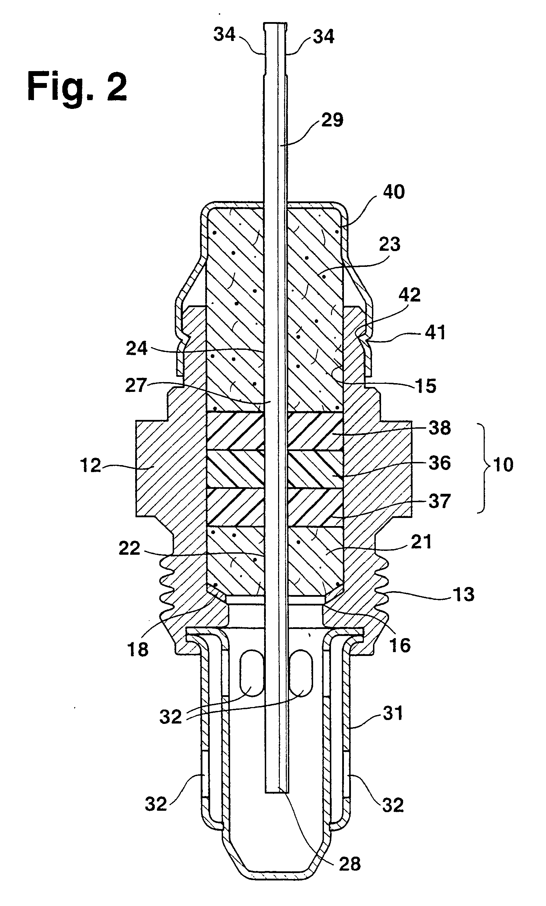

Ausführungsbeispiele der Erfindung sind in der Zeichnung dargestellt und in der nachfolgenden Beschreibung näher erläutert. Es zeigen Figur 1 einen Querschnitt durch eine Dichtungsanordnung eines Gassensors und Figur 2 ein weiteres Ausführungsbeispiel einer Dichtungsanordnung mit einem Sandwich-Aufbau.

### Ausführungsbeispiele

Figur 1 zeigt einen Teil eines Gassensors, beispielsweise eines elektrochemischen Sauerstoffsensors, mit einer Dichtungsanordnung 10, die in ein metallisches Gehäuse 12 eingesetzt ist und ein plättchenförmiges Sensorelement 27 fixiert. Das Gehäuse 12 hat eine Längsbohrung 15 mit einer schulterförmigen Ringfläche 16. Auf der schulterförmigen Ringfläche 16 befindet sich beispielsweise ein metallischer Dichtring 18, auf dem ein meßgasseitiges Keramikformteil 21 aufliegt. Das meßgasseitige Keramikformteil 21 hat in Richtung der Längsbohrung 15 verlaufend einen durchgehenden meßgasseitigen Durchbruch 22. Das Gehäuse 12 weist ferner ein Gewinde 13 als Befestigungsmittel für den Einbau in ein nicht dargestelltes Abgasrohr auf.

Beabstandet vom meßgasseitigen Keramikformteil 21 ist in der Längsbohrung 15 ferner ein anschlußseitiges Keramikformteil 23 angeordnet. Das anschlußseitige Keramikformteil 23 hat ebenfalls in Richtung der Längsbohrung 15 verlaufend einen zentral angeordneten und durchgehenden anschlußseitigen Durchbruch 24. Der meßgasseitige Durchbruch 22 des meßgasseitigen Keramikformteils 21 und der anschlußseitige Durchbruch 24 des anschlußseitigen Keramikformteils 23 verlaufen fluchtend zueinander.

In den Durchbrüchen 22, 24 befindet sich das Sensorelement 27 mit einem meßgasseitigen Endabschnitt 28 und einem anschlußseigtigen Endabschnitt 29. Der meßgasseitige Endabschnitt 28 ragt aus dem Gehäuse 12 heraus und ist von einem Schutzrohr 31 umgeben, das am Gehäuse 12 befestigt ist. Das Schutzrohr 31 weist Ein- und Austrittsöffnungen 32 für das zu messende Gas auf. Am anschlußseitigen Endabschnitt 29 besitzt das Sensorelement Anschlußkontakte 34, die ebenfalls aus dem Gehäuse 12 herausragen. Die Anschlußkontakte 34 werden mit einem nicht dargestellten mit einem Anschlußkabel versehenen Kontaktstecker kontaktiert. Der aus dem Gehäuse 12 herausragende anschlußseitige Endabschnitt 29 ist von einer nicht dargestellten Schutzhülse umgeben, die den Endabschnitt 29 vor Umgebungseinflüssen schützt und im Inneren einen Referenzgasraum bildet.

Zwischen dem meßgasseitigen Keramikformteil 21 und dem anschlußseitigen Keramikformteil 23 befindet sich eine Dichtung 36 die zwischen den beiden Keramikformteilen 21, 23 verpreßt ist. Auch im eingebauten Zustand bleibt die Dichtung 36 unter einem Preßdruck gehalten. Die dazu notwendige Anpreßkraft wird von einer Metallhülse 40 aufgebracht, die auf das anschlußseitige Keramikformteil 23 drückt. Die Metallhülse 40 hat dabei beispielsweise gleichmäßig verteilt mehrere, nach innen weisende Krallen 41, die in am Gehäuse 12 eingeformte Einkerbungen 42 eingreifen. Es ist aber genauso denkbar, die Metallhülse 40 mit dem Gehäuse 12 zu verschweißen.

Die Dichtung 36 besteht im wesentlichen aus Steatit mit einem Anteil von 80 - 90 Gew.% und aus Borsilikatglas mit einem Anteil von 10 - 20 Gew.%. Zur Herstellung der Dichtung 36 wird ein vorgepreßter Dichtring eingesetzt, der aus dem genannten Gemisch aus Steatit-Pulver und feinem Glas-Pulver hergestellt wird. Der Dichtring ist derart vorgepreßt, daß dessen Plastizität unter Aufbringen einer Preßkraft eine Verformung zuläßt. Nach dem Einsetzen des Dichtrings in die Längsbohrung 15 auf das meßgasseitige Keramikformteil 21 und dem Aufsetzen des anschlußseitigen Keramikformteils 22 auf demselben wird über die Metallhülse 40 die erforderliche Preßkraft zum Verpressen des Dichtrings aufgebracht. Danach wird die entsprechend vorgefertigte Baugruppe einer Wärmebehandlung bei ca. 600°C unterzogen. Durch die Wärmebehandlung wird das Glaspulver in der Steatit-Matrix aufgeschmolzen und diffundiert zum Teil in die Poren derselben. Dadurch wird die Durchlässigkeit für gasförmige und flüssige Kohlenwasserstoffe erheblich reduziert. Es ist aber auch denkbar, die Wärmebehandlung während des Verpressens des Dichtrings vorzusehen.

Durch eine anschließende weitere Wärmebehandlung bei ca. 600°C kann der verpreßte Dichtring weiter verdichtet werden, wodurch die vorhandene Restporsität des verpreßten Dichtrings nochmals reduziert wird, so daß sich die Dichtwirkung gegenüber Benzin weiter verbessert. Diese Wärmebehandlung bzw. weiteren Ausheizvorgänge finden auch beim praktischen Einsatz des Gassensors statt, auch wenn dabei keine Preßkräfte aufgebracht werden.

Eine weitere Ausführungsform einer Dichtungsanordnung 10 geht aus Figur 2 hervor, wobei gleiche Elemente mit den gleichen Bezugszeichen versehen sind. Bei dem Gassensor dieses Ausführungsbeispiels weist die Dichtungsanordnung 10 einen Sandwich-Aufbau gemäß der Ausführungsform der DE 195 32 090 auf, wobei die Dichtung 36 zwischen einem unteren Dichtelement 37 und einem oberen Dichtelement 38 angeordnet ist. Die Dichtung 36 besitzt die Zusammensetzung gemäß dem Ausführungsbeispiel in Figur 1. Die Dichtelemente 37 und 38 bestehen beispielsweise aus Steatit. Die Herstellung der Dichtungsanordnung 10 erfolgt in gleicher Weise wie beim Ausführungsbeispiel gemäß Figur 1, wobei die Dichtelemente 37 und 38 ebenfalls als vorgepreßte Steatit-Dichtringe eingesetzt werden, die in der Längsbohrung 15 zusammen mit dem Dichtring der Dichtung 36 verpreßt werden.

Neben der Dichtungsanordnung 10 in Figur 2 sind auch andere Sandwich-Aufbauten denkbar. Beispielsweise eine SandwichAnordnung aus zwei Dichtelementen, wobei das meßgasseitig angeordnete Dichtelement aus Steatit besteht und die Dichtung 36 anschlußseitig darüberliegende angeordnet ist.

Die Verwendung der erfindungsgemäßen Dichtung 36 ist nicht auf die Abdichtung von planaren Sensorelementen in metallischen Gehäusen beschränkt. Es ist durchaus denkbar, eine derartige Dichtung bzw. eine derartige Dichtungsanordnung auch zum Abdichten von sogenannten Fingersonden einzusetzen. Bei diesem Anwendungsfall muß dann lediglich die Ausführung der vorgepreßten Dichtringe auf die Geometrie der Längsbohrung und der Auflagefläche des Gehäuse und des fingerförmigen Sensorelements angepaßt werden.

## Patentansprüche

1. Gassensor, insbesondere zur Bestimmung des Sauerstoffgehaltes in Abgasen von Verbrennungsmotoren, mit einem Sensorelement (27) und einer Dichtungsanordnung (10,11), welche das Sensorelement (27) in einer Längsbohrung (15) eines metallischen Gehäuses (12) fixiert, **dadurch gekennzeichnet, dass** die Dichtungsanordnung (10,11) ein Dichtelement (36) aufweist, das ein Gemisch aus Steatit und mindestens einem niedrigschmelzenden Glas enthält.

2. Gassensor nach Anspruch 1, **dadurch gekennzeichnet, daß** das niedrigschmelzende Glas mit einem Anteil von 5 bis 30 Gew.% und das Steatit mit einem Anteil von 70 bis 95 Gew.% eingesetzt ist.

3. Gassensor nach Anspruch 1 oder 2, **dadurch gekennzeichnet, daß** das niedrigschmelzende Glas mit einem Anteil von 10 - 20 Gew.% und das Steatit mit einem Anteil von 80 - 90 Gew.% eingesetzt ist.

4. Gassensor nach Anspruch 1, **dadurch gekennzeichnet, daß** das niedrigschmelzende Glas Blei, Zink, Wismut oder Erdalkalimetalle in Form von Oxiden, Boraten, Phosphaten oder Silikaten oder eine Mischung aus diesen enthält.

5. Gassensor nach Anspruch 1, **dadurch gekennzeichnet, daß** die Dichtung (36) in der Längsbohrung (15) des Gehäuses (12) zwischen einem meßgasseitigen Keramikformteil (21) und einem anschlußseitigen Keramikformteil (23) angeordnet ist ist.

6. Gassensor nach Anspruch 5, **dadurch gekennzeichnet, daß** ein mit dem Gehäuse verbundenes Druckelement (40) vorgesehen ist, welches auf das anschlußseitige Keramikformteil (23) drückt.

7. Verfahren zur Herstellung eines Gassensors nach einem der vorhergehenden Ansprüche, **dadurch gekennzeichnet, daß** ein vorgefertiger Dichtring aus einem Gemisch aus Steatit-Pulver und mindestens einem niedrigschmelzenden Glaspulver eingesetzt wird, daß der vorgefertige Dichtring unter einer Preßkraft in der Längsbohrung plastisch verformt wird und daß der Dichtring einer Wärmebehandlung ausgesetzt wird, bei der das Glas aufgeschmolzen wird.

8. Verfahren nach Anspruch 7, **dadurch gekennzeichnet, daß** die Wärmebehandlung während oder nach dem Aufbringen der Preßkraft vorgenommen wird.

9. Verfahren nach Anspruch 8, **dadurch gekennzeichnet, daß** die Temperatur der Wärmebehandlung zwischen 500 und 700 °C liegt.

10. Verfahren nach Anspruch 8, **dadurch gekennzeichnet, daß** nach dem Verpressen die Dichtung einer zusätzlichen Wärmebehandlung zwischen 500 und 700 °C ausgesetzt wird.

## Claims

1. Gas sensor, in particular for determining the oxygen content in exhaust gases of internal combustion engines, having a sensor element (27) and a seal arrangement (10, 11) which fixes the sensor element (27) in a longitudinal bore (15) of a metallic housing (12), **characterized in that that** the seal arrangement (10, 11) has a sealing element (36) which contains a mixture of steatite and at least one low-melting glass.

2. Gas sensor according to Claim 1, **characterized in that** the low-melting glass is used with a proportion of 5 to 30% by weight and the steatite is used with a proportion of 70 to 95% by weight.

3. Gas sensor according to Claim 1 or 2, **characterized in that** the low-melting glass is used with a proportion of 10 to 20% by weight and the steatite is used with a proportion of 80 to 90% by weight.

4. Gas sensor according to Claim 1, **characterized in that** the low-melting glass contains lead, zinc, bismuth or alkaline earth metals in the form of oxides, borates, phosphates or silicates or a mixture thereof.

5. Gas sensor according to Claim 1, **characterized in that** the seal (36) is arranged in the longitudinal bore (15) of the housing (12) between a ceramic moulded part (21) on the measuring-gas side and a ceramic moulded part (23) on the connection side.

6. Gas sensor according to Claim 5, **characterized in that** a pressure element (40) is provided which is connected to the housing and which presses on the ceramic moulded part (13) on the connection side.

7. Method of producing a gas sensor according to one of the preceding claims, **characterized in that** a prefabricated sealing ring consisting of a mixture of steatite powder and at least one low-melting glass powder is used, **in that** the prefabricated sealing ring is plastically deformed in the longitudinal bore under a pressure force, and **in that** the sealing ring is subjected to a heat treatment during which the glass is fused.

8. Method according to Claim 7, **characterized in that** the heat treatment is carried out during or after the application of the pressure force.

9. Method according to Claim 8, **characterized in that** the temperature of the heat treatment is between 500 and 700°C.

10. Method according to Claim 8, **characterized in that**, after the pressing, the seal is subjected to an additional heat treatment between 500 and 700°C.

## Revendications

1. Détecteur de gaz, notamment pour déterminer la teneur en oxygène dans les gaz d'échappement de moteurs à combustion interne, comportant un élément de détecteur (27) et un dispositif d'étanchéité (10, 11) bloquant l'élément de détecteur (27) dans un perçage longitudinal (15) d'un boîtier métallique (12),
**caractérisé en ce que**
le dispositif d'étanchéité (10, 11) comporte un élément d'étanchéité (37) contenant un mélange de stéatite et d'au moins un verre à basse température de fusion.

2. Détecteur de gaz selon la revendication 1,
**caractérisé en ce que**
le verre à basse température de fusion correspond à une teneur comprise entre 5 et 30 % en poids et la stéatite correspond à une teneur comprise entre 70 et 95 % en poids.

3. Détecteur de gaz selon la revendication 1 ou 2,
**caractérisé en ce que**
le verre à basse température de fusion correspond à une teneur comprise entre 10 et 20 % en poids et la stéatite correspond à une teneur comprise entre 80 et 90 % en poids.

4. Détecteur de gaz selon la revendication 1,
**caractérisé en ce que**
le verre à basse température de fusion contient du plomb, du zinc, du bismuth ou des métaux alcalino-terreux sous la forme d'oxydes, de borates, de phosphates ou de silicates ou un mélange de ceux-ci.

5. Détecteur de gaz selon la revendication 1,
**caractérisé en ce que**
le joint (36) est logé dans le perçage longitudinal (15) du boîtier (12) entre une pièce moulée en céramique (21) côté gaz à mesurer et une pièce moulée en céramique (23) côté branchement.

6. Détecteur de gaz selon la revendication 5,
**caractérisé par**
un élément de pression (40) relié au boîtier, et qui pousse sur la pièce moulée en céramique (23) côté branchement.

7. Procédé de fabrication d'un détecteur de gaz selon l'une des revendications précédentes,
**caractérisé en ce qu'**
on utilise un joint d'étanchéité préfabriqué formé d'un mélange d'une poudre de stéatite et d'au moins une poudre de verre à basse température de fusion, on déforme plastiquement le joint d'étanchéité préfabriqué dans le perçage longitudinal en exerçant une force de poussée et on soumet le joint d'étanchéité à un traitement thermique pour faire fondre le verre.

8. Procédé de fabrication d'un détecteur de gaz selon la revendication 7,
**caractérisé en ce que**
le traitement thermique est effectué pendant ou après l'application de la force de compression.

9. Procédé de fabrication d'un détecteur de gaz selon la revendication 8,
**caractérisé en ce que**
la température du traitement thermique est comprise entre 500 et 700°C.

10. Procédé de fabrication d'un détecteur de gaz selon la revendication 8,
**caractérisé en ce qu'**
après compression, on expose le joint à un traitement thermique supplémentaire compris entre 500 et 700°C.
